# EUROPEAN PATENT SPECIFICATION

(11) **EP 1 355 212 B1**
(45) Date of publication and mention of the grant of the patent: **25.11.2009**
(21) Application number: 03252329.2
(22) Date of filing: 11.04.2003
(51) Int. Cl.: G05D 23/19, F24F 11/053, F24F 11/00

(54) **Improvement in temperature control systems**
Temperaturregeleinrichtung
Système de regulation de température

(30) Priority: 16.04.2002 GB 0208657
(43) Date of publication of application: 22.10.2003
(73) Proprietor: Honeywell Technologies Sarl, 1024 Ecublens (CH)
(72) Inventor: Feguson, Colin T., Hamilton ML3 7JY (GB); Mackie, Alastair D., Newarthill, Motherwell ML1 5SF (GB)
(74) Representative: Ford, James

(56) References cited:
- EP-A- 0 415 747
- EP-A- 0 520 827
- DE-A- 19 716 863
- US-A- 5 024 265

## Description

### FIELD OF INVENTION

The present invention relates to a temperature control system, and in particular, though not exclusively, to a method, and to a computer program for increasing the efficiency of a temperature control system for a zoned heating system.

### BACKGROUND TO INVENTION

Known control systems utilised in zoned heating systems take one of two forms, these being centralised controller system or distributed system.

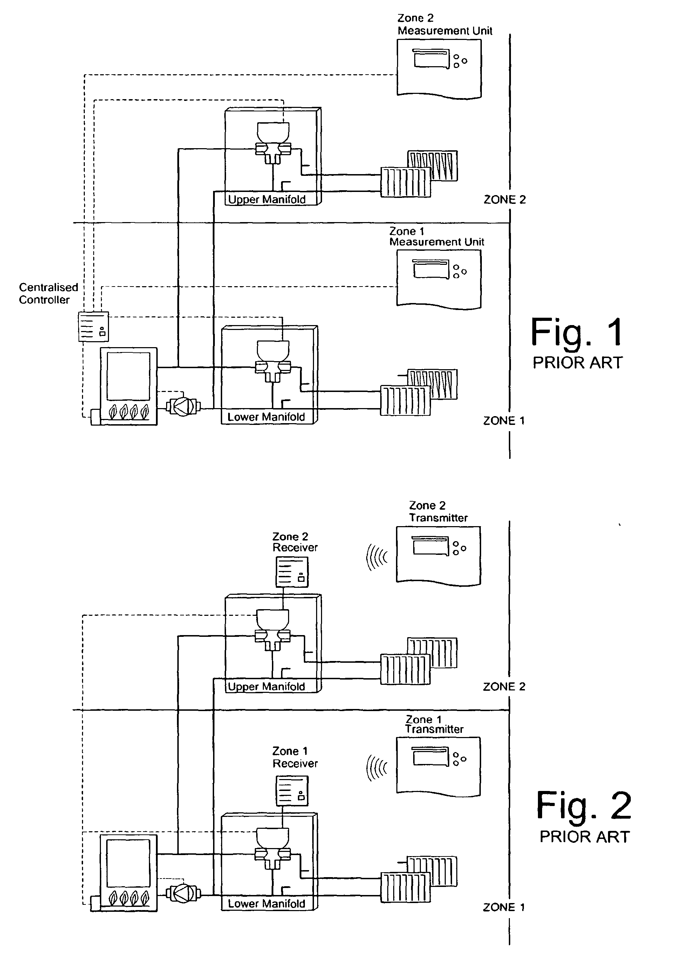

In a centralised controller system as depicted in Figure 1, a centralised controller receives energy requirements from each zone in a system, has direct control of an energy source, delivers energy to each zone in the system, and synchronises operation of the energy and delivery devices. Disadvantages of this type of system include the need for high reliability connections throughout the system. Therefore, these systems typically require wiring from each measurement device to the centralised controller, and from the centralised controller to each output device.

In a simple distributed system as depicted in Figure 2, control of an energy source is achieved through the use of an OR function on energy output requirements for each of the zones. That is to say, when any particular zone is on, the energy source is on. These types of system typically utilise radio frequency (RF) communicators between zone units and output controllers. Disadvantages of this type of system include possible reduction in boiler efficiency as a consequence of short on and off periods. Furthermore, loss of a control signal for a zone will have a large impact on the control performance of the system.

EP 0 520 827 (HONEYWELL) discloses an apparatus for balancing and controlling the temperature in comfort zones within a house or commercial building having a series of zone control devices which are selectively opened or closed to allow heating and/or cooling to individual zones. The temperature in each zone is sensed and compared to a preferred setpoint temperature to determine an error temperature for each zone. The respective error signals for each zone is used to determine the zone of greatest thermal error. The zone of greatest thermal error is used to turn the heating/cooling plant on and off. The remaining zone or zones of lesser thermal error have their zone control devices closed or opened, depending upon the error signal for their respective zones. In this manner, all zones are synchronised to the cycle of the zone of the greatest thermal error.

It is an object of at least one aspect of the present invention to provide a temperature control system which obviates or mitigates at least one problem associated with the prior art.

### SUMMARY OF INVENTION

According to a first aspect of the present invention there is provided a temperature control system comprising a plurality of distributed output controllers and means for providing a synchronisation signal to provide a common start reference for output cyclers of the output controllers so as to allow a respective temperature control device comprising a pump, valve, manifold or energy source to be activated or deactivated by one of the output controllers.

In use, such a temperature control system allows efficient utilisation of an energy source such as a boiler.

Preferably, the temperature control system may comprise a heating control system.

The system may also comprise at least one energy source, the synchronisation signal also synchronising an output cycler of the at least one energy source with the output cyclers of the output controllers.

In use, the invention increases the efficiency of a temperature control system by synchronising operation of the energy source and the control devices of the system. This is achieved by use of the synchronisation signal from a selected device in the system, so as to ensure that an on period of the devices and optionally energy source in the system coincide, thus minimising the on time of the energy source and hence increasing system efficiency. In addition, by distributing control of the devices by use of a plurality of controllers, the need for direct connection between devices in the system is removed, and the use of alternative communication methods such as radio frequency (RF) is allowed.

The temperature control system may be divided into zonal areas which are regulated independently of other zones by means of temperature set and temperature sensor means.

Each output controller may be adapted to receive data from a sensor in or for a zone for which the output controller regulates temperature.

An output controller may be used to operate a manifold or valve to supply energy to a respective zone, a required energy level being calculated by the output controller from data received from the respective temperature sensor means.

Preferably, each respective temperature sensor means and output controller communicates via a wireless method such as radio frequency RF communication.

Alternatively, other communication methods may be utilised, such as internet connection, LAN network connection or the like.

The temperature control devices may be selected from one or more of: pumps, valves, manifolds, energy sources such as a boiler, heat pump, heat exchanger, cooling compressor, or the like.

Preferably, each output controller includes a cycle timer or output cycler for use when the synchronisation signal is not received.

Preferably, any of the output controllers or sensors may be configurable to provide the synchronisation signal and hence perform the function of a timing master means.

In a first embodiment the energy source may be coupled to each manifold, such that if a manifold is open to allow a flow of energy then the energy source is activated.

In a second embodiment the energy source may be operated by an output controller which receives data from the zonal sensors, and calculates a duty cycle from data received from said zonal sensor means.

In a third embodiment the energy source output controller may be a transceiver which provides the synchronisation signal in order that there is provided a common start reference for the output cycles of the output controllers.

Each output controller may be associated with a respective temperature control device which comprises a respective zone receiver unit.

According to a second aspect of the present invention there is provided a building including a temperature control system according to the first aspect of the present invention.

The building may in a most preferred embodiment be a domestic dwelling.

According to a third aspect of the present invention there is provided a method of operating a temperature control system, the method comprising providing a synchronisation signal so as to provide a common start reference for output cyclers of a plurality of distributed output controllers to allow associated pump, valve, manifold and/or energy source devices to be activated and deactivated by one of the output controllers.

Such a synchronisation signal may synchronise switching on or off of the output controllers and therefore associated devices.

The associated devices may comprise a boiler and a plurality of zonal heating devices, eg radiators.

The method may include the step of designating one output controller as a timing master means which transmits the synchronisation signal.

Preferably, the method further includes the step of an output controller receiving data from a respective zonal sensor, and calculating a duty cycle from said data to allow a delivery of energy to a respective zone.

In a first embodiment the method may include the step of operating the energy source in response to a manifold opening.

In a second embodiment the method may include the step of operating the energy source by means of an output controller, said output controller receiving data from the zonal sensors, processing said data, and calculating a duty cycle from said energy source from the data received.

In said second embodiment, the method may further include a step of transmitting a synchronisation signal to ensure a common start time for the output cycle(s) of the output controllers.

According to a fourth aspect of the present invention there is provided a computer program comprising code means adapted to perform the method of the third aspect of the present invention when said program is run on a temperature control system.

The computer program may be embodied in a computer-readable medium.

In the method of the third aspect of the present invention the method may further comprise:
receiving data from at least one zonal sensor;
calculating a duty cycle for an on/off period of a device;
selecting an apparatus as a master timer means;
outputting a synchronisation signal from said master timer means to controllers in the system in order that the controllers have a common on or off reference for their respective output cycles.

### BRIEF DESCRIPTION OF DRAWINGS

These and other aspects of the present invention will become apparent from the following description when taken in combination with the accompanying drawings, which are:
- **Figure 1**: a schematic diagram of a centralised temperature control system according to the prior art;
- **Figure 2**: a schematic diagram of a distributed temperature control system according to the prior art;
- **Figure 3**: a schematic diagram of a temperature control system according to a first embodiment of the present invention;
- **Figure 4**: a schematic diagram of a temperature control system according to a second embodiment of the present invention;
- **Figure 5**: a schematic diagram of a temperature control system according to a third embodiment of the present invention; and
- **Figure 6**: a schematic diagram showing how synchronisation of devices may be achieved in the temperature control systems of Figures 3, 4 or 5.

### DETAILED DESCRIPTION OF DRAWINGS

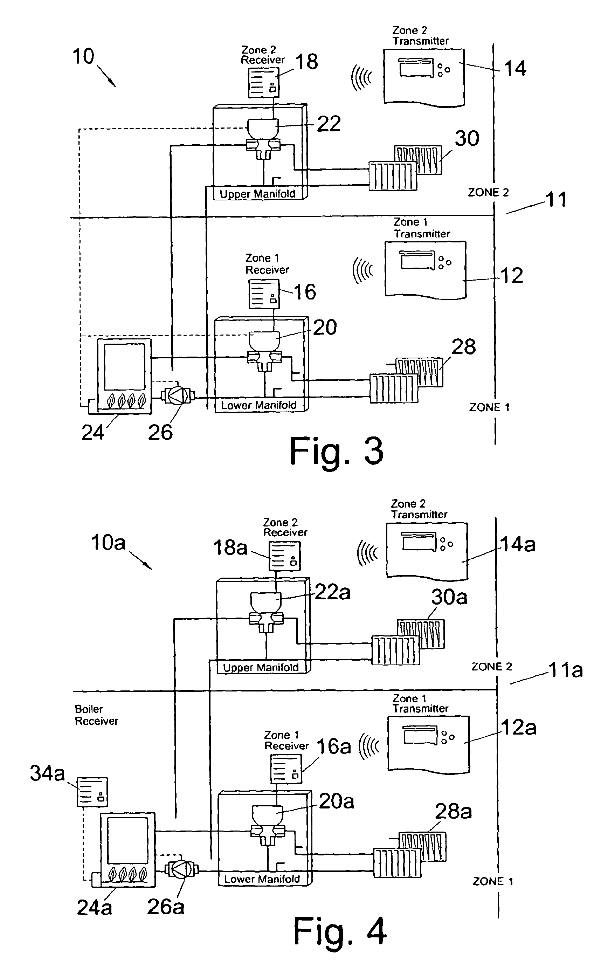

Referring initially to Figure 3, there is shown a temperature control system, generally designated by reference numeral 10, for a zoned dwelling 11 according to a first embodiment of the present invention. The temperature control system 10 comprises a plurality of temperature sensors 12,14, corresponding respective zone output controllers 16,18, and means for providing a synchronisation signal to synchronise output cyclers of the output controllers 16, 18 in order to allow respective temperature control devices comprising manifold valves, 20,22 to be activated or deactivated by the respective controller 16,18.

Figure 3 depicts a two zone system comprising zone 1 and zone 2, e.g. separate rooms. Each zone has a temperature sensor 12,14 having a temperature data RF transmitter and an output controller 16,18 having a temperature data RF receiver. Each output controller 16,18 controls a manifold valve 20,22 and therefore a respective radiator 28,30.

Referring specifically now to zone 1 of Figure 3. The transmitter unit 12 performs the function of calculating and sending a demand value to a respective zone receiver unit, ie output controller 16. The demand value may be calculated by taking measurements of ambient temperature in the zone and comparing this measurement with a desired temperature entered or stored within the transmitter unit 12. When the receiver unit 16 has received the demand value from the transmitter unit 12, the receiver unit 16 calculates the duty cycle a manifold 20 requires to be on and off to satisfy the demand value that has been received.

Either one of the zone transmitters 12, 14 may be designated as the means for providing the synchronisation signal, ie a timing master for the system 10. The timing master has the task of transmitting a synchronisation signal to zone receivers of all the output controllers 16,18 in the system 10. The synchronisation signal is used by the zone receivers of the output controllers 16,18 in order that the receivers output cycle are synchronised with one another.

It should be noted that any device within the system capable of transmitting a signal, may be adapted such that the device can perform the function of the timing master, and that during installation it can be determined which device will be the timing master.

The temperature control system 10 also includes an energy source 24, which in this embodiment is a boiler, and a pump 26 to circulate fluid to radiators 28,30. The temperature control system 10 depicted in Figure 3 does not contain a boiler controller, and therefore control of the boiler 24 is achieved by directly hard wiring the boiler 24 to an end switch within each of the manifolds 20,22, such that whenever a manifold 20,22 is open, the boiler 24 is activated.

Referring now to Figure 4, there is shown a second embodiment of a temperature control system, generally designated 10a, according to the present invention. Like parts of the temperature control system 10a are identified by the same numerals as in the temperature control system 10 but suffixed with "a".

In the temperature control system 10a, each zone transmitter unit 12a,14a sends a demand value to its respective receiver 16a,18a and in addition, transmits the demand value to a boiler receiver 34a. This configuration provides the added advantage of eliminating the need for hardwiring between the manifold valves 20a,22a and the boiler 24a.

When the boiler receiver 34a has received the demand values from each of the respective zone transmitters, the boiler receiver 34a calculates the boilers duty cycle, and hence on time in accordance a maximum demand received from the transmitter units 12a,14a.

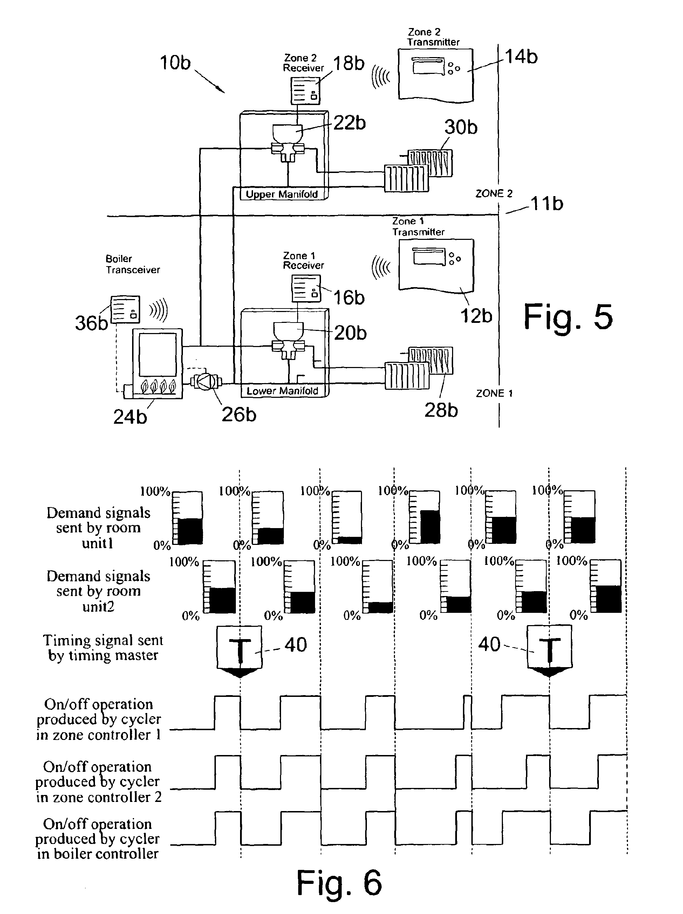

Referring now to Figure 5, there is shown a third embodiment of a temperature control system, generally designated 10b, according to the present invention. Like parts of a temperature control system 10b are identified by the same numerals as in the temperature control system 10, but suffixed with "b".

In the temperature control system 10b, each zone transmitter sends a demand value to its respective receiver 16b,18b, and also to a boiler transceiver 36b. The boiler transceiver 36b calculates the required boiler on time from a maximum demand received from the zone transmitters.

In addition, the boiler transceiver 36b is designated as timing master for the system 10b. Therefore, during periods when the boiler 24b is required to be switched on, the boiler transceiver 36b transmits a synchronisation signal which is used by the zone receivers 16b,18b to synchronise any cycling that is required in order that a flow of energy is delivered to the radiators 28b,30b.

Referring now to Figure 6, there is shown a schematic diagram illustrating how a synchronisation signal 40 is used to control output cycles/output cyclers from devices when used in a zone system in which the system incorporates a boiler controller and individual zone manifold valve controllers.

As previously discussed, demand values are transmitted from room units (which measure room temperature and review a room set-point from a user) to their respective zone controllers and optionally to a boiler output controller. Then, at the start of each cycle these demand values are used by the cycler in each output controller to calculate the required on and off times for each respective output device, eg manifold valve, boiler etc.

As can be seen from Figure 6, the output cycle of the output cycler for each of the controller units are synchronised with one another. This is achieved by the use of a synchronisation signal 40, denoted by large "T". The synchronisation signal 40 is transmitted to each controller by a single device within the system, the device being designated as the timing master for the system.

As illustrated, the synchronisation signal 40 need not be transmitted at the start of every cycle. The synchronisation signal may only need to be transmitted intermittently, eg every hour or so, in order to re-synchronise the output cycle for each of the controllers. In the interim period when the synchronisation signal 40 is not transmitted, the timing cycle can be controlled by an internal clock within each of the controllers. Therefore, frequency of transmission of the synchronisation signal 40 will be dependent on how good the internal clocks perform within the individual controllers, to maintain the output cycles in a synchronised state.

The synchronisation of the outputs of the control devices are used to ensure that the "on" period of the devices coincide with one another, as is illustrated in Figure 6, thereby minimising the on time of the energy source and hence increasing system efficiency.

It will be appreciated that various modifications may be made to the embodiments hereinbefore described without departing from the scope of the invention. For example, communication between devices may be via internet connection, LAN networks or the like.

It should be noted that a principal advantage of the present invention is distribution of control throughout the temperature control system, thereby removing the need for direct wiring while also providing energy efficiency benefits.

It will also be appreciated that in the present invention one cycles the operation of the valves under the control of the respective output controller. This results in an effective cycling of fluid, eg water, temperature to each zonal heating device resulting in minimal room temperature variations.

It will further be appreciated that data from a zonal sensor may include one or more of: room temperature, room setpoint temperature, room error, (ie a measure of the difference between room temperature and room setpoint temperature), room demands (eg 0% to 100%), etc.

## Claims

1. A temperature control system (10;10a;10b) **characterized in that** it comprises a plurality of distributed output controllers (16, 18; 16a, 18a; 16b, 18b;) and means for providing a synchronisation signal to provide a common start reference for output cyclers of the output controllers so as to allow a respective temperature control device comprising a pump, valve, manifold or energy source (20,22,24,26; 20a,22a,24a,26a; 20b,22b,24b,26b) to be activated or deactivated by one of the output controllers.

2. A temperature control system as claimed in claim 1, wherein the temperature control system comprises a heating control system.

3. A temperature control system as claimed in either of claims 1 or 2, wherein the temperature control system further comprises at least one energy source (24;24a;24b), the synchronisation signal also synchronising an output cycler (34a;36b) of the at least one energy source with the output cyclers of the output controllers.

4. A temperature control system as claimed in any preceding claim, wherein the temperature control system is divided into zonal areas (1,2) which are regulated independently of other zones by means of temperature set and temperature sensor means.

5. A temperature control system as claimed in any preceding claim, wherein each output controller is adapted to receive data from a temperature sensor means in a zone for which the output controller regulates temperature.

6. A temperature control system as claimed in either of claims 4 or 5, wherein, in use, an output controller operates a manifold or valve to supply energy to a respective zone, a required energy level being calculated by the output controller from data received from the respective temperature sensor means.

7. A temperature control system as claimed in claim 6, wherein each respective temperature sensor means and output controller communicate via a wireless method such as radio frequency (RF) communication.

8. A temperature control system as claimed in claim 6, wherein each respective temperature sensor means and output controller communicate via a method selected from one of internet connection or LAN network connection.

9. A temperature control system as claimed in any preceding claim, wherein the energy sources are selected from one or more of: a boiler, heat pump, heat exchanger or cooling compressor.

10. A temperature control system as claimed in any preceding claim, wherein each output controller includes a cycle timer for use when the synchronisation signal is not received.

11. A temperature control system as claimed in any of claims 4 to 10, wherein any of the output controllers or temperature sensor means are configurable to provide the synchronisation signal, and perform the function of a timing master means.

12. A temperature control system as claimed in any of claims 6 to 12, wherein the energy source is coupled to each manifold or valve such that if a manifold or valve is open to allow a flow of energy then the energy source is activated.

13. A temperature control system as claimed in any of claims 4 to 11, wherein the energy source is operated by an output controller which receives data from the zonal sensors, and calculates a duty cycle from data received from said zonal temperature sensor means.

14. A temperature control system as claimed in any of claims 4 to 13 when dependent upon claim 3, wherein the energy source output controller is a transceiver (36b), which provides the synchronisation signal in order that there is provided a common start reference for the output cyclers of the output controllers.

15. A temperature control system as claimed in any preceding claim, wherein each output controller (16,18;16a,18a;16b,18b) associated with a respective temperature control device comprising a pump, valve, manifold or energy source, (20,22,24,26; 20a,22a,24a,26a; 20b,22b,24b,26b) comprises a respective zone receiver unit.

16. A building (11) including a temperature control system according to any of claims 1 to 15.

17. A building as claimed in claim 16, wherein the building is a domestic dwelling.

18. A method of operating a temperature control system (10;10a;10b), the method being **characterized in that** it comprises the step of providing a synchronisation signal so as to provide a common start reference for output cyclers of a plurality of distributed output controllers (16,18;16a,18a;16b,18b) to allow associated pump, valve, manifold and/or energy source devices (20,22,24,26; 20a,22a,24a,26a; 20b,22b, 24b,26b) to be activated and deactivated by one of the output controllers.

19. A method as claimed in claim 18, wherein the synchronisation signal synchronises switching on or off of the output controllers and therefore the associated devices.

20. A method as claimed in claim 19, wherein the associated devices comprise a boiler (24;24a;24b) and a plurality of zonal heating devices (28,30;28a,30a;28b,30b).

21. A method as claimed in any of claims 18 to 20, wherein the method includes the step of designating one output controller or temperature sensor means as a timing master means which transmits the synchronisation signal.

22. A method as claimed in any of claims 18 to 21, wherein the method further includes the step of an output controller receiving data from a respective zonal sensor and calculating a duty cycle from said data to allow a delivery of energy to a respective zone from an energy source (24;24a,24b).

23. A method as claimed in claim 22, wherein the method includes the step of operating the energy source in response to a manifold or valve (20,22;20a,22a;20b,22b) opening.

24. A method as claimed in claim 23, wherein the method includes the step of operating the energy source by means of an output controller, said output controller receiving data from temperature sensor means, processing said data, and calculating a duty cycle from said energy source from the data received.

25. A method as claimed in claim 24, wherein the method further includes a step of transmitting a synchronisation signal to ensure a common start time for output cycler(s) of the output controllers.

26. A computer program comprising code means adapted to perform the method of claims 18 to 25 when said program is run on a temperature control system.

27. A computer program as claimed in claim 26 embodied in a computer-readable medium.

28. A method of operating a temperature control system as claimed in claim 18, the method further comprising:
receiving data from at least one zonal sensor;
calculating a duty cycle for an on/off period of a device;
selecting an apparatus as a master timer means;
outputting a synchronisation signal from said master timer means to the distributed output controllers in order that the distributed output controllers have a common on or off reference for their respective output cycles.

## Patentansprüche

1. Temperaturkontrollsystem (10; 10a; 10b), **dadurch gekennzeichnet, dass** es mehrere verteilte Ausgangskontrolleinheiten (16, 18; 16a, 18a; 16b, 18b) und Mittel zum Bereitstellen eines Synchronisationssignals aufweist, um eine gemeinsame Startreferenz für Ausgangszykler der Ausgangskontrolleinheiten bereitzustellen, so dass eine entsprechende Temperaturkontrollvorrichtung, die eine Pumpe, ein Ventil, einen Verteiler oder eine Energiequelle (20, 22, 24, 26; 20a, 22a, 24a, 26a; 20b, 22b, 24b, 26b) aufweist, durch eine der Ausgangskontrolleinheiten aktiviert oder deaktiviert werden kann.

2. Temperaturkontrollsystem nach Anspruch 1, wobei das Temperaturkontrollsystem ein Heizkontrollsystem aufweist.

3. Temperaturkontrollsystem nach einem der Ansprüche 1 oder 2, wobei das Temperaturkontrollsystem des Weiteren mindestens eine Energiequelle (24; 24a; 24b) aufweist, wobei das Synchronisationssignal auch einen Ausgangszykler (34a; 36b) der mindestens einen Energiequelle mit den Ausgangszyklern der Ausgangskontrolleinheiten synchronisiert.

4. Temperaturkontrollsystem nach einem der vorangehenden Ansprüche, wobei das Temperaturkontrollsystem in Zonenbereiche (1, 2) unterteilt ist, die unabhängig von anderen Zonen mit Hilfe von Temperatureinstell- und Temperatursensormitteln reguliert werden.

5. Temperaturkontrollsystem nach einem der vorangehenden Ansprüche, wobei jede Ausgangskontrolleinheit dazu ausgebildet ist, Daten von einem Temperatursensormittel in einer Zone zu empfangen, für die die Ausgangskontrolleinheit die Temperatur reguliert.

6. Temperaturkontrollsystem nach einem der Ansprüche 4 oder 5, wobei in Verwendung eine Ausgangskontrolleinheit einen Verteiler oder ein Ventil zum Zuführen von Energie zu einer entsprechenden Zone betätigt, wobei ein erforderlicher Energiepegel von der Ausgangskontrolleinheit aus den Daten berechnet wird, die von dem entsprechenden Temperatursensormittel empfangen werden.

7. Temperaturkontrollsystem nach Anspruch 6, wobei jedes entsprechende Temperatursensormittel und jede Ausgangskontrolleinheit über ein drahtloses Verfahren, wie eine Funkfrequenz- (RF-) Kommunikation, kommuniziert.

8. Temperaturkontrollsystem nach Anspruch 6, wobei jedes entsprechende Temperatursensormittel und jede Ausgangskontrolleinheit über ein Verfahren kommuniziert, das ausgewählt ist aus einer Internetverbindung oder einer LAN-Netzwerkverbindung.

9. Temperaturkontrollsystem nach einem der vorangehenden Ansprüche, wobei die Energiequellen ausgewählt sind aus einem oder mehreren von: einem Boiler, einer Wärmepumpe, einem Wärmetauscher oder einem Kühlkompressor.

10. Temperaturkontrollsystem nach einem der vorangehenden Ansprüche, wobei jede Ausgangskontrolleinheit einen Zykluszeitgeber enthält, der verwendet wird, wenn das Synchronisationssignal nicht empfangen wird.

11. Temperaturkontrollsystem nach einem der Ansprüche 4 bis 10, wobei jede der Ausgangskontrolleinheiten oder jedes der Temperatursensormittel konfigurierbar ist, um das Synchronisationssignal bereitzustellen und die Funktion eines Zeitgebermastermittels durchzuführen.

12. Temperaturkontrollsystem nach einem der Ansprüche 6 bis 12, wobei die Energiequelle an jeden Verteiler oder jedes Ventil gekoppelt ist, so dass, wenn ein Verteiler oder Ventil offen ist, wodurch ein Energiestrom möglich ist, die Energiequelle aktiviert ist.

13. Temperaturkontrollsystem nach einem der Ansprüche 4 bis 11, wobei die Energiequelle durch eine Ausgangskontrolleinheit betrieben wird, die Daten von den Zonensensoren empfängt und einen Arbeitszyklus aus den Daten berechnet, die von dem Zonentemperatursensormittel empfangen werden.

14. Temperaturkontrollsystem nach einem der Ansprüche 4 bis 13, wenn abhängig von Anspruch 3, wobei die Energiequellenausgangskontrolleinheit ein Sendeempfänger (36b) ist, der das Synchronisationssignal bereitstellt, damit eine gemeinsame Startreferenz für die Ausgangszykler der Ausgangskontrolleinheiten bereitgestellt ist.

15. Temperaturkontrollsystem nach einem der vorangehenden Ansprüche, wobei jede Ausgangskontrolleinheit (16, 18; 16a, 18a; 16b, 18b), die mit einer entsprechenden Temperaturkontrollvorrichtung verbunden ist, die eine Pumpe, ein Ventil, einen Verteiler oder eine Energiequelle (20, 22, 24, 26; 20a, 22a, 24a, 26a; 20b, 22b, 24b, 26b) aufweist, eine entsprechende Zonenempfängereinheit aufweist.

16. Gebäude (11), enthaltend ein Temperaturkontrollsystem nach einem der Ansprüche 1 bis 15.

17. Gebäude nach Anspruch 16, wobei das Gebäude ein Wohnhaus ist.

18. Verfahren zum Betreiben eines Temperaturkontrollsystems (10; 10a; 10b), wobei das Verfahren **dadurch gekennzeichnet ist, dass** es den Schritt des Bereitstellens eines Synchronisationssignals aufweist, um eine gemeinsame Startreferenz für Ausgangszykler von mehreren verteilten Ausgangskontrolleinheiten (16, 18; 16a, 18a; 16b, 18b) bereitzustellen, so dass eine zugehörige Pumpen-, Ventil-, Verteiler- und/oder Energiequellenvorrichtung (20, 22, 24, 26; 20a, 22a, 24a, 26a; 20b, 22b, 24b, 26b) durch eine der Ausgangskontrolleinheiten aktiviert oder deaktiviert werden kann.

19. Verfahren nach Anspruch 18, wobei das Synchronisationssignal das Ein- oder Ausschalten der Ausgangskontrolleinheiten und daher der zugehörigen Vorrichtungen synchronisiert.

20. Verfahren nach Anspruch 19, wobei die zugehörigen Vorrichtungen einen Boiler (24; 24a; 24b) und mehrere Zonenheizvorrichtungen (28, 30; 28a, 30a; 28b, 30b) aufweisen.

21. Verfahren nach einem der Ansprüche 18 bis 20, wobei das Verfahren den Schritt des Festlegens einer Ausgangskontrolleinheit oder eines Temperatursensormittels als Zeitgebermastermittel enthält, das das Synchronisationssignal überträgt.

22. Verfahren nach einem der Ansprüche 18 bis 21, wobei das Verfahren des Weiteren den Schritt des Empfangens von Daten durch eine Ausgangskontrolleinheit von einem entsprechenden Zonensensor und des Berechnens eines Arbeitszyklus aus den Daten aufweist, um eine Abgabe von Energie an eine entsprechende Zone von einer Energiequelle (24; 24a; 24b) zu ermöglichen.

23. Verfahren nach Anspruch 22, wobei das Verfahren den Schritt des Betreibens der Energiequelle als Reaktion auf ein Öffnen eines Verteilers oder Ventils (20, 22; 20a, 22a; 20b, 22b) enthält.

24. Verfahren nach Anspruch 23, wobei das Verfahren den Schritt des Betreibens der Energiequelle mit Hilfe einer Ausgangskontrolleinheit enthält, wobei die Ausgangskontrolleinheit Daten von dem Temperatursensormittel empfängt, die Daten verarbeitet, und einen Arbeitszyklus von der Energiequelle aus den empfangenen Daten berechnet.

25. Verfahren nach Anspruch 24, wobei das Verfahren des Weiteren einen Schritt zum Senden eines Synchronisationssignals enthält, um eine gemeinsame Startzeit für einen oder mehrere Ausgangszykler der Ausgangskontrolleinheiten zu garantieren.

26. Computerpogramm, umfassend ein Kodiermittel, das dazu ausgebildet ist, das Verfahren nach Anspruch 18 bis 25 auszuführen, wenn das Programm auf einem Temperaturkontrollsystem läuft.

27. Computerprogramm nach Anspruch 26, das in einem computerlesbaren Medium enthalten ist.

28. Verfahren zum Betreiben eines Temperaturkontrollsystems nach Anspruch 18, wobei das Verfahren des Weiteren umfasst:
Empfangen von Daten von mindestens einem Zonensensor;
Berechnen eines Arbeitszyklus für eine Ein/Aus-Periode einer Vorrichtung;
Auswählen einer Vorrichtung als Masterzeitgebermittel;
Ausgeben eines Synchronisationssignals von dem Masterzeitgebermittel an die verteilten Ausgangskontrolleinheiten, so dass die verteilten Ausgangskontrolleinheiten eine gemeinsame Ein- oder Aus-Referenz für ihre entsprechenden Ausgangszyklen haben.

## Revendications

1. Système (10; 10a; 10b) de contrôle de température, **caractérisé en ce qu'**il comprend plusieurs contrôleurs de sortie répartis (16, 18; 16a, 18a; 16b, 18b) et des moyens qui délivrent un signal de synchronisation qui fournit une référence initiale commune aux cycleurs de sortie des contrôleurs de sortie de manière à permettre l'activation ou la désactivation par l'un des contrôleurs de sortie d'un dispositif respectif de contrôle de température qui comprend une pompe, une soupape, un collecteur ou une source d'énergie (20, 22, 24, 26; 20a, 22a, 24a, 26a; 20b, 22b, 24b, 26b).

2. Système de contrôle de température selon la revendication 1, dans lequel le système de contrôle de température comprend un système de contrôle de chauffage.

3. Système de contrôle de température selon l'une des revendications 1 ou 2, dans lequel le système de contrôle de température comprend en outre au moins une source d'énergie (24; 24a; 24b), le signal de synchronisation synchronisant également un cycleur de sortie (34a; 36b) de la ou des sources d'énergie par rapport aux cycleurs de sortie des contrôleurs de sortie.

4. Système de contrôle de température selon l'une quelconque des revendications précédentes, dans lequel le système de contrôle de température est divisé en zones (1, 2) qui sont régulées indépendamment des autres zones à l'aide de moyens de fixation de température et de moyens de détection de température.

5. Système de contrôle de température selon l'une quelconque des revendications précédentes, dans lequel chaque contrôleur de sortie est adapté pour recevoir des données d'un moyen de détection de température placé dans une zone dont le contrôleur de sortie régule la température.

6. Système de contrôle de température selon l'une quelconque des revendications 4 ou 5, dans lequel, en utilisation, un contrôleur de sortie actionne un collecteur ou une vanne de manière à délivrer de l'énergie à une zone respective, le niveau requis d'énergie étant calculé par le contrôleur de sortie à partir de données reçues des moyens de détection de température concernés.

7. Système de contrôle de température selon la revendication 6, dans lequel chaque moyen de détection de température et le contrôleur de sortie respectif communiquent par un procédé sans fil, par exemple une communication à fréquence radio (RF).

8. Système de contrôle de température selon la revendication 6, dans lequel chaque moyen de détection de température et le contrôleur de sortie respectif communiquent par un procédé sélectionné parmi une connexion internet et une connexion par réseau LAN.

9. Système de contrôle de température selon l'une quelconque des revendications précédentes, dans lequel les sources d'énergie sont sélectionnées parmi une chaudière, une pompe à chaleur, un échangeur de chaleur et/ou un compresseur de refroidissement.

10. Système de contrôle de température selon l'une quelconque des revendications précédentes, dans lequel chaque contrôleur de sortie comprend une horloge de cycle qui est utilisée lorsque le signal de synchronisation n'est pas reçu.

11. Système de contrôle de température selon l'une quelconque des revendications 4 à 10, dans lequel un quelconque des contrôleurs de sortie ou des moyens de détection de température peut être configuré pour délivrer le signal de synchronisation et exécuter la fonction de moyen-maître de synchronisation.

12. Système de contrôle de température selon l'une quelconque des revendications 6 à 12, dans lequel la source d'énergie est raccordée à chaque collecteur ou vanne de telle sorte que la source d'énergie soit activée si un collecteur ou une vanne sont ouverts pour permettre un flux d'énergie.

13. Système de contrôle de température selon l'une quelconque des revendications 4 à 11, dans lequel la source d'énergie est actionnée par un contrôleur de sortie qui reçoit des données des détecteurs de zone et qui calcule un cycle de travail à partir de données reçues desdits moyens de détection de température de zone.

14. Système de contrôle de température selon l'une quelconque des revendications 4 à 13 dans la mesure où elles dépendent de la revendication 3, dans lequel le contrôleur de sortie des sources d'énergie est un émetteur-récepteur (36b) qui délivre le signal de synchronisation qui fournit une référence initiale commune aux cycleurs de sortie des contrôleurs de sortie.

15. Système de contrôle de température selon l'une quelconque des revendications précédentes, dans lequel chaque contrôleur de sortie (16, 18; 16a, 18a; 16b, 18b) associé à un dispositif respectif de contrôle de température comprenant une pompe, une vanne, un collecteur ou une source d'énergie (20, 22, 24, 26; 20a, 22a, 24a, 26a; 20b, 22b, 24b, 26b) comprend une unité respective de réception de zone.

16. Bâtiment (11) contenant un système de contrôle de température selon l'une quelconque des revendications 1 à 15.

17. Bâtiment selon la revendication 16, dans lequel le bâtiment est une habitation.

18. Procédé de conduite d'un système de contrôle de température (10; 10a; 10b), le procédé étant **caractérisé en ce qu'**il comprend l'étape qui consiste à délivrer un signal de synchronisation de manière à fournir une référence de départ commune à des cycleurs de sortie de plusieurs contrôleurs de sortie répartis (16, 18; 16a, 18a; 16b, 18b) pour permettre l'activation et la désactivation par l'un des contrôleurs de sortie de dispositifs associés de pompe, de vanne, de collecteur et/ou de source d'énergie (20, 22, 24, 26; 20a, 22a, 24a, 26a; 20b, 22b, 24b, 26b).

19. Procédé selon la revendication 18, dans lequel le signal de synchronisation synchronise la commutation marche-arrêt des contrôleurs de sortie et donc des dispositifs qui leur sont associés.

20. Procédé selon la revendication 19, dans lequel les dispositifs associés contiennent une chaudière (24; 24a; 24b), plusieurs dispositifs de chauffage et plusieurs zones (28, 30; 28a, 30a; 28b, 30b).

21. Procédé selon l'une quelconque des revendications 18 à 20, dans lequel le procédé comprend l'étape qui consiste à désigner un contrôleur de sortie ou un moyen de détection de température comme moyen-maître de synchronisation qui émet le signal de synchronisation.

22. Procédé selon l'une quelconque des revendications 18 à 21, dans lequel le procédé comprend en outre les étapes de réception par un contrôleur de sortie de données d'une sonde de zone respective de calcul par le contrôleur d'un cycle de travail à partir desdites données pour permettre de fournir à la zone concernée de l'énergie provenant d'une source d'énergie (24; 24a; 24b).

23. Procédé selon la revendication 22, dans lequel le procédé comprend l'étape qui consiste à activer la source d'énergie en réponse à l'ouverture d'un collecteur ou d'une vanne (20, 22; 20a, 22a; 20b, 22b).

24. Procédé selon la revendication 23, dans lequel le procédé comprend l'étape qui consiste à activer la source d'énergie au moyen d'un contrôleur de sortie, ledit contrôleur de sortie recevant des données de moyens de détection de température, traitant lesdites données et calculant un cycle de travail de ladite source d'énergie à partir des données reçues.

25. Procédé selon la revendication 24, dans lequel le procédé comprend en outre une étape d'émission d'un signal de synchronisation pour garantir un instant de départ commun aux cycleurs de sortie des contrôleurs de sortie.

26. Programme informatique comprenant un moyen codé adapté pour exécuter le procédé selon les revendications 18 à 25 lorsque ledit programme tourne sur un système de contrôle de température.

27. Programme informatique selon la revendication 26, configuré sous la forme d'un support lisible par ordinateur.

28. Procédé de conduite d'un système de contrôle de température selon la revendication 18, le procédé comprenant en outre les étapes qui consistent à :
recevoir des données d'au moins une sonde de zone,
calculer un cycle de travail d'une période de marche-arrêt d'un dispositif,
sélectionner un appareil comme moyen-maître de synchronisation et
faire délivrer par ledit moyen-maître de synchronisation un signal de synchronisation aux contrôleurs de sortie répartis, de telle sorte que les cycles de sortie respectifs des contrôleurs de sortie répartis présentent une référence commune de marche-arrêt.
